# EUROPEAN PATENT APPLICATION

(11) **EP 3 588 613 A1**
(43) Date of publication of application: **01.01.2020**
(21) Application number: 19177123.7
(22) Date of filing: 28.05.2019
(51) Int. Cl.: H01M 2/16, H01M 10/052

(54) **ELECTROCHEMICAL DEVICE**

(30) Priority: 25.06.2018 CN 201810665401
(71) Applicant: Ningde Amperex Technology Limited, Ningde City, Fujian Province, 352100 (CN)
(72) Inventor: LIN, Chaowang, Ningde City, Fujian Province 352100 (CN); ZHONG, Huawei, Ningde City, Fujian Province 352100 (CN); YANG, Fan, Ningde City,,Fujian Province 352100 (CN); SU, Yisong, Ningde City, Fujian Province 352100 (CN)
(74) Representative: Klunker IP Patentanwälte PartG mbB

(57) **Abstract**

This application relates to an electrochemical device having safety performance. Specifically, this application provides an electrochemical device, including: an anode, the anode comprising an anode active material layer; a separator; and a polymer layer, wherein the polymer layer is disposed between the anode active material layer and the separator. The polymer layer comprises polymer particles, and the polymer particles according to some embodiments of this application have a sphericity of about 0.70 to about 1.0. This application effectively protects the anode by providing a non-conductive or poorly conductive inactive substance (for example, non-conductive polymer particles) between the anode active material layer and the separator, so as to ensure that the electrochemical device does not generate an internal short circuit when being impacted, penetrated or squeezed by an external force, which causes a failure of the electrochemical device.

## Description

### BACKGROUND

### 1. Technical Field

This application relates to an electrochemical device, and more specifically, to an electrochemical device having nail penetration safety performance.

### 2. Description of the Related Art

Electrochemical devices (for example, lithium-ion batteries) have entered our daily lives with advances in technology and improvement of environmental protection requirements. With the proliferation of lithium-ion batteries, at present, most mobile devices are powered by lithium-ion batteries, such as mobile phones and notebook computers. In addition, lithium-ion batteries have been actively developed to replace petrochemical fuels as energy supply devices for electric vehicles and hybrid vehicles. However, the safety technology of lithium-ion batteries is currently not mature, and occasionally there are safety problems caused by external force puncture of lithium-ion batteries at the user end (for example, causing a lithium-ion battery to explode). Therefore, with the proliferation of lithium-ion batteries, users, after-sales ends and lithium-ion battery manufacturers have put forward new requirements for the safety performance of lithium-ion batteries.

In view of this, it is indeed necessary to provide an improved electrochemical device (for example, a lithium-ion battery) having good safety performance.

### SUMMARY

The embodiments of this application seek to solve at least one of the problems that exist in the related art at least to a certain extent by providing an electrochemical device having safety performance.

In an embodiment, this application provides an electrochemical device, comprising: an anode, the anode including an anode active material layer; a separator; and a polymer layer, wherein the polymer layer is disposed between the anode active material layer and the separator.

The polymer layer comprises polymer particles, the polymer particles having a sphericity of about 0.70 to about 1.0. In some embodiments, the polymer particles have a sphericity of about 0.80 to about 1.0. In other embodiments, the polymer particles have a sphericity of about 0.8 to about 1.0. In some embodiments, the polymer particles have a sphericity of about 0.98.

According to the embodiments of this application, the material of the polymer particles contains at least one polar group in a main chain or a branched chain, the polar group being selected from the group consisting of a carbon-carbon double bond, a carbon-carbon triple bond, a hydroxyl group, a carboxyl group, imide, a sulfonyl group and combinations thereof. In an embodiment, the polymer particles are selected from the group consisting of polyethylene (PE), modified polyethylene, polypropylene (PP), polymethyl methacrylate (PMMA), polyimide (PI), polyacrylic acid (PAA), modified polyacrylic acid, polystyrene (PS) and combinations thereof.

According to the embodiments of this application, the polymer particles have a melting temperature of about 80°C to about 500°C. In some embodiments, the polymer particles have a melting temperature of about 100°C to about 200°C.

According to the embodiments of this application, the polymer particles have a Dv50 (particle diameter at which 50% by cumulative volume is reached) of about 0.2 µm to about 2 µm. In some embodiments, the polymer particles have a Dv50 of about 1 µm.

According to the embodiments of this application, the polymer particles have a Dv99 (particle diameter at which 99% by cumulative volume is reached) of about 0.5 µm to about 5 µm. In some embodiments, the polymer particles have a Dv99 of about 3 µm.

According to the embodiments of this application, the polymer layer has a thickness of about 0.5 µm to about 5 µm. In some embodiments, the polymer layer has a thickness of about 1 µm to about 3 µm.

According to the embodiments of this application, the polymer layer has a porosity of about 20% to about 80%. In some embodiments, the polymer layer has a porosity of about 50%.

According to the embodiments of this application, the polymer layer is disposed on a surface of the anode active material layer, and the polymer layer has a coverage on the surface of the anode active material layer of about 50% to about 100%. In some embodiments, the polymer layer has a coverage on the surface of the anode active material layer of about 80% to about 100%.

According to the embodiments of this application, the polymer layer further includes a binder, the binder being selected from the group consisting of polyacrylonitrile, polyacrylate ester, polyacrylate salt, styrene butadiene rubber, sodium carboxymethylcellulose, polyvinylidene fluoride, polyvinyl ether, vinylidene fluoride-hexafluoropropylene copolymer, polytetrafluoroethylene, polyhexafluoropropylene and combinations thereof.

According to the embodiments of this application, the weight percentage of the binder is about 1% to about 5% based on the total weight of the polymer layer.

According to the embodiments of this application, the surface of the polymer layer is patterned or roughened.

According to the embodiments of this application, the binding force between the polymer layer and the anode active material layer is about 5 N/m or more. In some embodiments, the binding force between the polymer layer and the anode active material layer is about 15 N/m.

According to the embodiments of this application, the binding force between the polymer layer and the separator is about 5 N/m or more. In some embodiments, the binding force between the polymer layer and the separator is about 10 N/m.

According to the embodiments of this application, the electrochemical device is a lithium-ion battery. The lithium-ion battery includes an electrode assembly, the electrode assembly including a wound structure, a laminated structure or a folded structure.

According to the embodiments of this application, the lithium-ion battery is a pouch lithium-ion battery, a square aluminum shell lithium-ion battery or a cylindrical lithium-ion battery.

The additional aspects and advantages of the embodiments of this application will be partly described and illustrated in the following description, or explained by the implementation of the embodiments of this application.

### BRIEF DESCRIPTION OF THE DRAWINGS

The drawings that are necessary to describe the embodiments of this application or the prior art will be briefly described below to facilitate the description of the embodiments of this application. Obviously, the drawings in the following description are only some embodiments of this application. For those skilled in the art, the drawings of other embodiments can still be obtained according to the structures illustrated in the drawings without creative efforts.
FIG. 1 is a schematic structural diagram of a lithium-ion battery according to the prior art.
FIG. 2 is a schematic structural diagram of a lithium-ion battery according to an embodiment of this application.
FIG. 3 is a schematic diagram of a nail penetration process of a lithium-ion battery according to the prior art.
FIG. 4 is a schematic diagram of a nail penetration process of a lithium-ion battery according to an embodiment of this application.
FIG. 5 is a sphericity distribution diagram fitted with an instrument when the sphericity is 0.98.
FIG. 6 is a scanning electron microscope (SEM) image of polymer particles having a sphericity of 0.98 used in this application.
FIG. 7a to FIG. 7e are SEM images of polymer particles having different sphericities used in this application.

### DETAILED DESCRIPTION

The embodiments of this application will be described in detail below. Throughout the specification, the same or similar components and components having the same or similar functions are denoted by similar reference numerals. The embodiments of the related drawings described herein are illustrative and graphical, and are intended to provide a basic understanding of this application. The embodiments of this application should not be construed as limitations to this application.

In this application, unless otherwise specified or limited, when a first feature is "above" or "below" a second feature in a structure, the structure may include an embodiment in which the first feature is in direct contact with the second feature, and the structure may also include another embodiment in which the first feature is not in direct contact with the second feature, but is in contact by using an additional feature formed therebetween. Furthermore, when the first feature is "above" the second feature, "on" the second feature, or "on the top of the second feature", it may include an embodiment in which the first feature is directly or obliquely located "above" the second feature, "on" the second feature, or "on the top of the second feature", or it only represents the height of the first feature being higher than the height of the second feature; and when the first feature is "below" the second feature, "under" the second feature, or "on the bottom of the second feature", it may include an embodiment in which the first feature is directly or obliquely located "below" the second feature, "under" the second feature, or "on the bottom of the second feature", or it only represents the height of the first feature being lower than the height of the second feature.

As used herein, the term "about" is used to describe and explain minor changes. When used in conjunction with an event or situation, the term may refer to examples where the event or situation occurs exactly as intended and examples where the event or situation is very similar to that which was intended. For example, when being used in conjunction with a numerical value, the term may refer to a variation range that is less than or equal to ±10% of the numerical value, such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. In addition, amounts, ratios and other numerical values are sometimes presented herein in a range format. It should be understood that such range formats are for convenience and brevity, and should be interpreted with flexibility, and furthermore include not only those numerical values that are specifically designated as range limitations, but also include all individual numerical values or sub-ranges that are within the range, as each value and sub-range is specified explicitly.

The most rigorous test in the evaluation of the safety performance of an electrochemical device (such as a lithium-ion battery, exemplified below as a lithium-ion battery) is the nail penetration test: a lithium-ion battery is pierced by a pointed steel nail of a certain diameter at a certain speed to short-circuit the lithium-ion battery. There are generally two types of short circuits: internal short circuit of electrodes of a lithium-ion battery (electrodes of the lithium-ion battery are in contact and connection during the nail penetration process to form a short circuit) and a short circuit indirectly generated by the electrode via the nail (electrodes of the lithium-ion battery are not directly connected, but are both in contact with the nail for penetration; since the nail itself is made of steel, it can conduct electricity, thereby connecting the electrode sheets). Specifically, lithium-ion batteries may undergo four short-circuit typetypes during the nail penetration: cathode active material layer-anode active material layer, cathode active material layer-anode current collector (usually copper foil), cathode current collector (usually aluminum foil)-anode current collector (usually copper foil) and cathode current collector (usually aluminum foil)-anode active material layer.

In the above four short-circuit types, the short-circuit type of the cathode current collector (usually aluminum foil)-anode active material layer is the most dangerous one due to the fact that the heat generation power is very large during the short circuit and the anode active material layer easily fails. Therefore, avoiding such a short-circuit type of the cathode current collector (usually aluminum foil)-anode active material layer during the nail penetration is the most effective means for improving the nail penetration safety of the lithium-ion battery.

To avoid the short-circuit type of the cathode current collector (usually aluminum foil)-anode active material layer during the nail penetration, a coating having a larger resistivity is provided on the surface of the anode active material layer or a coating having a larger resistivity is provided on the surface of the cathode current collector to avoid direct contact between the anode active material layer and the cathode current collector, thereby avoiding the most dangerous short-circuit type.

This application effectively increases the electric resistance of the surface of the anode active material layer by providing a non-conductive or poorly conductive inactive substance (for example, non-conductive polymer particles) between the anode active material layer and the separator, so that, in the nail penetration process, even if the cathode current collector (such as aluminum foil) penetrates the separator, it cannot directly contact the anode active material layer, and thus the lithium-ion battery does not generate the most dangerous short-circuit type of cathode current collector-anode active material layer in the nail penetration process. This technical means ensures that the lithium-ion battery does not generate an internal short circuit when being impacted, penetrated or squeezed by an external force, which causes a failure of the lithium-ion battery, thereby ensuring the mechanical safety performance of the lithium-ion battery.

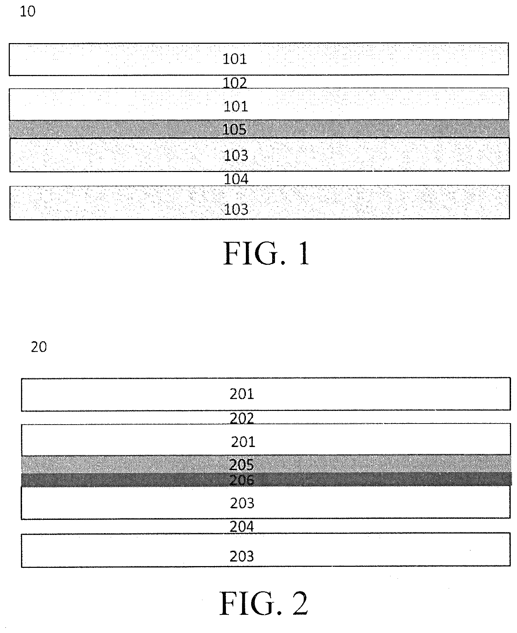

FIG. 1 shows a schematic structural diagram of a lithium-ion battery 10 according to the prior art. The lithium-ion battery 10 has a cathode, an anode and a separator. The cathode has a cathode current collector 102 between the cathode active material layers 101, the anode has an anode current collector 104 between the anode active material layers 103, and the separator 105 is disposed between the cathode and the anode.

FIG. 2 shows a schematic structural diagram of a lithium-ion battery according to an embodiment of this application. The lithium-ion battery 20 has a cathode, an anode, a separator and a polymer layer. The cathode has a cathode current collector 202 between the cathode active material layers 201, the anode has an anode current collector 204 between the anode active material layers 203, the separator 205 is disposed between the cathode and the anode, and the polymer layer 206 is disposed between the anode active material layer 203 and the separator 205.

The polymer layer disposed between the anode active material layer and the separator may be single polymer particles or a mixture of multiple polymer particles. In order to increase the binding effect between the polymer layer and the anode, a slurry may be prepared from the polymer particles (for example, but not limited to, polyethylene (PE), modified polyethylene, polypropylene (PP), polymethyl methacrylate (PMMA), polyimide (PI), polyacrylic acid (PAA), modified polyacrylic acid and polystyrene (PS), etc.) and a binder (for example, modified polyvinylidene fluoride (PVDF)), and coated on the surface of the anode active material layer or the surface of the separator facing the anode.

The polymer particles may have a spherical or spheroidal structure. In some embodiments, the polymer particles have a spherical structure. The spherical structure or spheroidal structure can ensure the uniformity of the polymer layer, and has little influence on the wettability and the kinetic performance of the lithium-ion battery. According to embodiments of this application, the polymer particles have a sphericity of about 0.70 to about 1.0. In some embodiments, the polymer particles have a sphericity of about 0.80 to about 1.0. In other embodiments, the polymer particles have a sphericity of about 0.87 to about 1.0. In other embodiments, the polymer particles have a sphericity of about 0.98.

In this application, the "sphericity" of a polymer particle refers to the ratio of the surface area of a sphere having the same volume as the polymer particle to the actual surface area of the polymer particle. When the sphericity is 1, the polymer particles are intact spheres. When the polymer particles have a spheroidal structure (such as an ellipsoid), the sphericity is less than 1.

The sphericity test can be performed by an image method. Sphericity is a concept of space volume. If the particles are very small, such as micron-sized particles, direct measurement has certain difficulties. The usual method is to make the two-dimensional area projection of the particle equivalent to its three-dimensional specific surface area, that is, to make the degree of closeness between the projected area of the particle and the circle equivalent to the sphericity of the particle: by analyzing the particle projection, the diameter and length-diameter ratio of the particle are obtained, the equivalent area and equivalent perimeter of the particle are obtained, and the actual perimeter of the particle is compared with the equivalent perimeter to obtain the sphericity of the particle. When the amount of sample is very small (such as a few of particles), this test method produces a large error; but for micron-sized particles, usually a very small amount of sample (such as 3g) can contain millions of particles, and due to the free movement in the space, the particles can be projected into shapes in various directions, so that the sphericity of the material can be accurately calculated.

Since the particles may not be identical, the sphericity data measured by the particle image work station or the particle shape analyzer actually exhibits a normal distribution, and the output result is usually the center value of the normal distribution. The sphericity is actually a comprehensive value of the sphericity of all particles, that is, 50% of the particles in this sample have a sphericity greater than this value, 50% of the particles have a sphericity smaller than this value, and the frequency of particle distribution close to this sphericity is the highest.

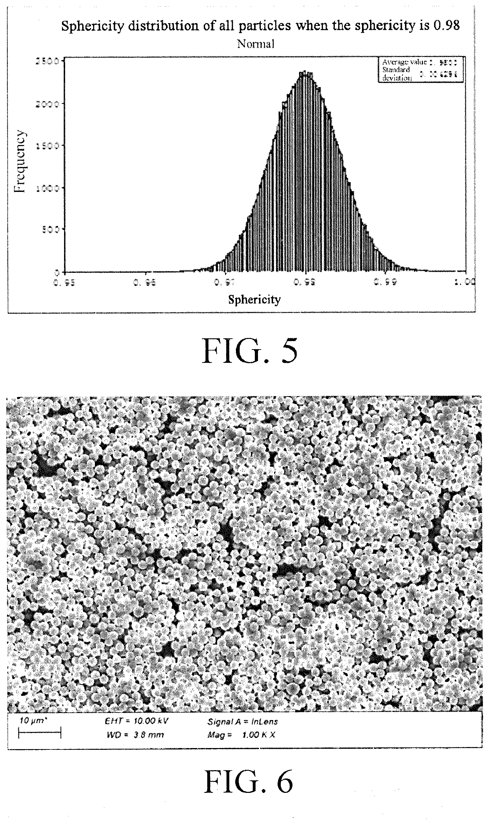

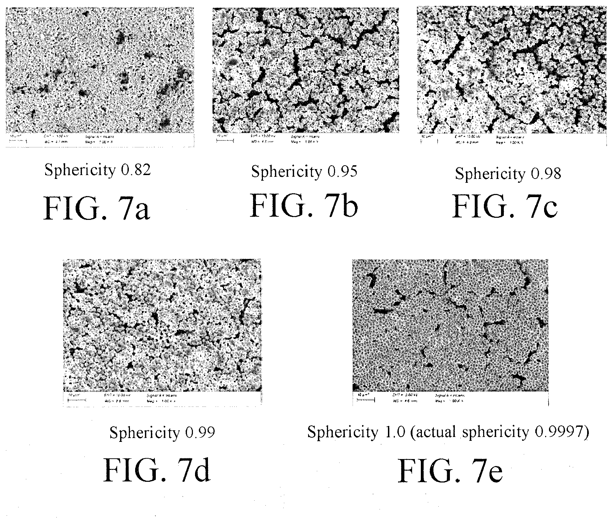

FIG. 5 shows a sphericity distribution diagram fitted with an instrument when the sphericity is 0.98. FIG. 6 shows a scanning electron microscope (SEM) image of polymer particles having a sphericity of 0.98 used in this application. FIG. 7a to FIG. 7e show SEM images of polymer particles having different sphericities.

The particle size of the polymer particles can be made very small so that the thickness of the polymer layer can be made very thin to ensure the coverage of the polymer layer. The smaller the particle size of the polymer particles is, the more layers of stack particles contained in the same thickness, and the better the nail penetration effect. According to the embodiments of this application, in the volume-based particle size distribution, the particle size (Dv50) of the polymer particles from the small particle diameter side to 50% by cumulative volume is less than or equal to about 2 µm. In the volume-based particle size distribution, the particle size (Dv99) of the polymer particles from the small particle diameter side to 99% by cumulative volume is less than or equal to about 5 µm.

In the nail penetration process, the polymer particles will melt due to the increase of temperature, and the molten polymer can better cover the anode active material layer, which can effectively prevent the cathode current collector from contacting the anode active material layer, thereby improving the nail penetration performance of the lithium-ion battery. If the melting temperature of the polymer particles is too low, the lithium-ion battery may melt part of the polymer particles during the formation process, causing the molten polymer to cover the anode and thereby affecting the kinetic performance of the lithium-ion battery. In some embodiments, the polymer particles have a melting temperature of about 80°C to about 500°C. In other embodiments, the polymer particles have a melting temperature of about 100°C to about 200°C. Polymer particles having different melting temperatures may be controlled by controlling the polymerization degree and molecular weight of the polymer; and the polymer particles having different melting temperatures may also be obtained by polymerizing multiple polymer monomers together.

In order to ensure better protection for the anode, the polymer layer needs to have a certain thickness. If the polymer layer is too thin, the blocking effect on the cathode current collector (such as aluminum foil) is insufficient; and if the polymer layer is too thick, the volume energy density of the lithium-ion battery will be lowered, and the lithium ion transport in the lithium-ion battery will be affected, thereby lowering the kinetic performance of the lithium-ion battery. According to the embodiments of this application, the polymer layer has a thickness of about 0.5 µm to about 5 µm. In some embodiments, the polymer layer has a thickness of about 1 µm to about 3 µm.

In the nail penetration process, if the coverage on the surface of the anode active material layer is too low, the cathode current collector has a certain probability of contacting the anode active material layer not covered by the polymer layer, thereby causing the failure of the lithium-ion battery in the nail penetration process. Therefore, it is desired that the coverage of the polymer layer on the anode active material layer is as high as possible. According to the embodiments of this application, the coverage of the polymer layer on the anode active material layer is not less than about 50%. In some embodiments, the coverage of the polymer layer on the anode active material layer is about 80% to about 100%.

When the polymer layer is coated on the surface of the anode active material layer, the electrolytic solution needs to penetrate the polymer layer to wet the anode active material layer. In addition, in the charging and discharging process of the lithium-ion battery, the transport of lithium ions between the cathode and anode also needs to pass through the polymer layer. Therefore, the higher the porosity of the polymer layer, the better the wettability of the electrolytic solution and the lower the resistance for transporting the lithium ion. However, if the porosity is too high, the polymer layer becomes very loose, so that the burrs or flashes of the cathode current collector (for example, aluminum foil) directly contact the surface of the anode active material layer through the pores, resulting in weakening of the protective effect on the anode active material layer and a lower pass rate of the nail penetration test. According to the embodiments of this application, the polymer layer has a porosity of about 20% to about 80%. In some embodiments, the polymer layer has a porosity of about 50%.

In the nail penetration process, in order to increase the electric resistance of the surface of the anode active material layer, the polymer layer on the surface of the anode active material layer cannot fall off. Therefore, the binding force of the polymer layer to the anode active material layer must be relatively large. In order to achieve this objective, according to embodiments of this application, the polymer layer may further include a binder, the binder being selected from, for example, but not limited to, one or more of polyacrylonitrile, polyacrylate ester, polyacrylate salt, styrene butadiene rubber, sodium carboxymethylcellulose, polyvinylidene fluoride, polyvinyl ether, vinylidene fluoride-hexafluoropropylene copolymer, polytetrafluoroethylene and polyhexafluoropropylene. In some embodiments, the binding force between the polymer layer and the anode active material layer is greater than or equal to about 5 N/m. In some embodiments, the binding force between the polymer layer and the anode active material layer is about 15 N/m.

The separator used in the lithium-ion battery generally has a certain ductility, so that the separator can also function to isolate the cathode current collector and the anode active material layer in the nail penetration process, and thus, the polymer layer may also be disposed on the surface of the separator facing the anode side. In other embodiments, the surface of the polymer layer may be patterned or roughened to increase the binding force of the polymer layer to the anode active material layer or to the separator.

The design of this application can be used in electrochemical devices (for example, lithium-ion batteries) of different structures. More specifically, this application may be applied to a lithium-ion battery having a wound structure, a laminated structure or a folded structure.

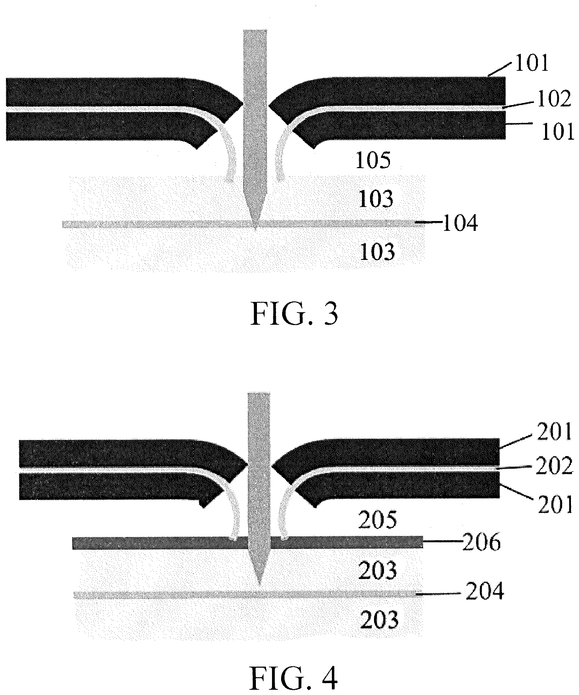

FIG. 3 and FIG. 4 respectively show schematic diagrams of the nail penetration process of the lithium-ion battery according to the prior art shown in FIG. 1 and the lithium-ion battery according to the embodiments of this application shown in FIG. 2. As shown in FIG. 3, the cathode current collector 102 (aluminum foil) is directly in contact with the anode active material layer 103, causing a short circuit between the cathode current collector (aluminum foil) and the anode active material layer. In FIG. 4, since the polymer layer 206 exists between the anode active material layer 203 and the separator 205, the cathode current collector (aluminum foil) is short-circuited with the polymer layer in the nail penetration process, so that the short circuit type of the cathode current collector (aluminum foil)-anode active material layer does not occur, thereby making the short-circuit process safe.

The technical solution of this application has the following advantages or beneficial effects compared to the prior art:
This application uses polymer particles as the main material of the polymer layer. Compared with inorganic materials, the most important feature of the polymer particles is that they are easily melted at high temperature. Since the local temperature at the opening penetrated by a nail can often reach more than 1000°C in the nail penetration process, this temperature far exceeds the melting temperature of the polymer particles. Therefore, the polymer particles can adhere to the surface of the anode active material layer better after melting, thereby enhancing the protective effect on the anode active material layer. Since the inorganic material does not substantially melt, its improvement effect is inferior to that of the polymer particles. Due to this melting feature, the polymer layer can be thinner than the inorganic coating and has a greater advantage in the volume energy density of the battery. In addition, the polymer particles adhere to the surface of the nail for penetration after melting, forming the effect of wrapping the nail. After the nail is wrapped by the polymer, the contact with the cathode current collector (for example, aluminum foil) and the anode active material layer is reduced, thereby reducing the short-circuit points and improving the nail penetration pass rate of the lithium-ion battery.

The polymer particles used in this application may be spherical or spheroidal, and the spherical or spheroidal material has better uniformity on the surface of the anode active material layer, are more closely stacked, and has a relatively fixed gap between particles (the distance between the particles is relatively uniform). Although the position of the nail for penetration is fixed in the nail penetration test, the point at which the lithium-ion battery is short-circuited during actual use is random. The high uniformity and high stacking density of the spherical or spheroidal particles well enhance the uniformity of the nail penetration improvement effects. In addition, the polymer layer adopts spherical particles or spheroidal particles, and the gaps between the particles are very uniform, which is beneficial to the wetting of the electrolytic solution between the polymer layers; and the distance of lithium ion transport is relatively fixed, and the wettability and kinetic performance of the lithium-ion battery can be ensured.

Another advantage of using polymer particles having a certain sphericity is that after melting, the polymer particles adhere the separator to the anodes, so that the protective effect of the separator on the anode active material layer is enhanced, and thus, exposure of the anode active material layer caused by the shrinkage of the separator due to the temperature increase does not occur in the nail penetration process. In addition, the polymer particles will block the pores of the separator after melting, so that the pores of the separator are closed, thereby blocking the transport path of lithium ions and reducing the probability of thermal runaway in the short-circuit process.

In order to protect the anode, the polymer layer must be able to bind well with the anode active material layer and cannot fall off in the nail penetration process. In order to achieve this binding ability, the polymer particles contained in the polymer layer at least contain one polar group which may be on the main chain or on the branched chain, and this group may be bonded to a polar group on the surface of the graphite by a chemical bond or a hydrogen bond, or bonded to the binder in the anode active material layer, thereby improving the binding effect.

According to an embodiment of this application, the lithium-ion battery includes a cathode including a cathode active material layer, an anode including an anode active material layer, an electrolyte and a separator between the cathode and the anode, where the above-mentioned polymer layer may be coated on the surface of the anode active material layer and/or on the surface of the separator facing the anode. The cathode current collector may be aluminum foil or nickel foil, and the anode current collector may be copper foil or nickel foil.

In the above lithium-ion battery, the cathode active material layer includes a cathode material capable of absorbing and releasing lithium (Li) (hereinafter, sometimes referred to as "a cathode material capable of absorbing/releasing lithium (Li)"). Examples of the cathode material capable of absorbing/releasing lithium (Li) may include one or more of lithium cobaltate, lithium nickel cobalt manganese oxide, lithium nickel cobalt aluminum oxide, lithium manganate, lithium manganese iron phosphate, lithium vanadium phosphate, oxylithium vanadium phosphate, lithium iron phosphate, lithium titanate and lithium-rich manganese-based material.

In the above cathode material, the chemical formula of lithium cobaltate may be LiₓCoₐM1_{b}O_{2-c}, where M1 is selected from the group consisting of nickel (Ni), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), yttrium (Y), lanthanum (La), zirconium (Zr), silicon (Si) and combinations thereof, and the values of x, a, b and c are respectively in the following ranges: 0.8≤x≤1.2, 0.8≤a≤1, 0≤b≤0.2 and -0.1≤c≤0.2;

In the above cathode material, the chemical formula of the lithium nickel cobalt manganese oxide or lithium nickel cobalt aluminum oxide may be Li_{y}Ni_{d}M2ₑO_{2-f}, where M2 is selected from the group consisting of cobalt (Co), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), zirconium (Zr), silicon (Si) and combinations thereof, the values of y, d, e and f are respectively in the following ranges: 0.8≤y≤1.2, 0.3≤d≤0.98, 0.02≤e≤0.7 and -0.1≤f≤0.2;

In the above cathode material, the chemical formula of lithium manganate is Li₂Mn_{2-g}M3_{g}O₄₋ₕ, where M3 is selected from the group consisting of cobalt (Co), nickel (Ni), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W) and combinations thereof, and the values of z, g and h are respectively in the following ranges: 0.8≤z≤1.2, 0≤g≤1.0 and -0.2≤h≤0.2.

The anode active material layer includes an anode material capable of absorbing and releasing lithium (Li) (hereinafter, sometimes referred to as "an anode material capable of absorbing/releasing lithium (Li)"). Examples of the anode material capable of absorbing/releasing lithium (Li) may include carbon materials, metal compounds, oxides, sulfides, nitrides of lithium such as LiN₃, lithium metal, metals forming alloys together with lithium, and polymer materials.

Examples of the carbon material may include low graphitized carbon, easily graphitizable carbon, artificial graphite, natural graphite, mesophase carbon microspheres, soft carbon, hard carbon, pyrolytic carbon, coke, vitreous carbon, organic polymer compound sintered bodies, carbon fibers and activated carbon. The coke may include pitch coke, needle coke and petroleum coke. The organic polymer compound sintered body refers to a material obtained by calcining a polymer material such as a phenol plastic or a furan resin at a suitable temperature to carbonize it, and some of these materials are classified into low graphitized carbon or easily graphitizable carbon. Examples of the polymer material may include polyacetylene and polypyrrole.

Among these anode materials capable of absorbing/releasing lithium (Li), a material whose charging and discharging voltages are close to the charging and discharging voltages of lithium metal is selected. This is because the lower the charging and discharging voltages of the anode material, the easier the lithium-ion battery has a higher energy density. The anode material may be carbon materials because their crystal structures are only slightly changed during charging and discharging, and therefore, good cycle performance and large charging and discharging capacities can be obtained. For example, graphite is selected because it gives a large electrochemical equivalent and high energy density.

Further, the anode material capable of absorbing/releasing lithium (Li) may include elemental lithium metal, metal elements and semimetal elements capable of forming alloys together with lithium (Li), alloys and compounds including such elements, and the like. For example, they are used together with carbon materials since the good cycle performance and high energy density can be obtained in this case. In addition to the alloys including two or more metal elements, the alloys used herein also include alloys including one or more metal elements and one or more semimetal elements. The alloy may be in the form of a solid solution, an eutectic crystal, an intermetallic compound, and a mixture thereof.

Examples of the metal elements and the semimetal elements may include tin (Sn), lead (Pb), aluminum (Al), indium (In), silicon (Si), zinc (Zn), antimony (Sb), bismuth (Bi), cadmium (Cd), magnesium (Mg), boron (B), gallium (Ga), germanium (Ge), arsenic (As), silver (Ag), zirconium (Zr), yttrium (Y) and hafnium (Hf). Examples of the above alloys and compounds may include a material having a chemical formula: MaₛMbₜLiᵤ and a material having a chemical formula: MaₚMc_{q}Mdᵣ. In these chemical formulae, Ma represents at least one of metal elements and semimetal elements capable of forming an alloy together with lithium; Mb represents at least one of metal elements and semimetal elements other than lithium and Ma; Mc represents at least one of the non-metal elements; Md represents at least one of metal elements and semimetal elements other than Ma; and s, t, u, p, q and r satisfy s>0, t≥0, u≥0, p>0, q>0 and r≥0.

In addition, an inorganic compound not including lithium (Li), such as MnO₂, V₂O₅, V₆O₁₃, NiS and MoS, may be used in the anode.

The above lithium-ion battery further includes the electrolyte, and the electrolyte may be one or more of a gel electrolyte, a solid electrolyte and an electrolytic solution, and the electrolytic solution includes a lithium salt and a nonaqueous solvent.

The lithium salt is selected from the group consisting of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, lithium difluoroborate and combinations thereof. For example, the lithium salt is LiPF₆ because it can give a high ionic conductivity and improve the cycle performance.

The nonaqueous solvent may be a carbonate compound, a carboxylate compound, an ether compound, other organic solvents, or a combination thereof.

The carbonate compound may be a chain carbonate compound, a cyclic carbonate compound, a fluorocarbonate compound, or a combination thereof.

Examples of the chain carbonate compound are diethyl carbonate (DEC), dimethyl carbonate (DMC), dipropyl carbonate (DPC), methylpropyl carbonate (MPC), ethylpropyl carbonate (EPC), methylethyl carbonate (MEC) and combinations thereof. Examples of the cyclic carbonate compound are ethylene carbonate (EC), propylene carbonate (PC), butylene carbonate (BC), vinyl ethylene carbonate (VEC) and combinations thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate and combinations thereof.

Examples of the carboxylate compound are methyl acetate, ethyl acetate, n-propyl acetate, t-butyl acetate, methyl propionate, propyl propionate, ethyl propionate, γ-butyrolactone, decalactone, valerolactone, mevalonolactone, caprolactone, methyl formate and combinations thereof.

Examples of the ether compound are dibutyl ether, tetraethylene glycol dimethyl ether, diglyme, 1,2-dimethoxyethane, 1,2-diethoxyethane, ethoxy methoxyethane, 2-methyltetrahydrofuran, tetrahydrofuran and combinations thereof.

Examples of other organic solvents are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate and combinations thereof.

Examples of the separator are polyethylene, polypropylene, polyethylene terephthalate, polyimide, aramid and combinations thereof, where the polyethylene is selected from the group consisting of high density polyethylene, low density polyethylene, ultrahigh molecular weight polyethylene and combinations thereof. In particular, the polyethylene and polypropylene, which have a good effect on preventing short circuits, can improve the stability of the battery by means of the shutdown effect.

The separator surface may further include a porous layer disposed on the surface of the separator, the porous layer including inorganic particles and a binder, and the inorganic particles being selected from the group consisting of alumina (Al₂O₃), silicon oxide (SiO₂), magnesium oxide (MgO), titanium oxide (TiO₂), hafnium oxide (HfO₂), tin oxide (SnO₂), cerium oxide (CeO₂), nickel oxide (NiO), zinc oxide (ZnO), calcium oxide (CaO), zirconium dioxide (ZrO₂), yttrium oxide (Y₂O₃), silicon carbide (SiC), boehmite, aluminum hydroxide, magnesium hydroxide, calcium hydroxide, barium sulfate and combinations thereof. The binder is selected from the group consisting of polyvinylidene fluoride, vinylidene fluoride-hexafluoropropylene copolymer, polyamide, polyacrylonitrile, polyacrylate ester, polyacrylic acid, polyacrylate salt, sodium carboxymethylcellulose, polyvinylpyrrolidone, polyvinyl ether, polymethyl methacrylate, polytetrafluoroethylene, polyhexafluoropropylene and combinations thereof.

The porous layer on the surface of the separator can improve the heat resistance, oxidation resistance and electrolyte wettability of the separator, and enhance the binding property between the separator and the electrode sheet.

Although exemplified above with the lithium-ion battery, those skilled in the art, after reading this application, can conceive that the polymer layer of this application can be used in other suitable electrochemical devices. Such an electrochemical device includes any device that generates an electrochemical reaction, and its specific examples include all kinds of primary batteries, secondary batteries, fuel cells, solar cells or capacitors. In particular, the electrochemical device is a lithium secondary battery, including a lithium metal battery, a lithium-ion battery, a lithium polymer battery or a lithium ion polymer battery.

Hereinafter, a lithium-ion battery is taken as an example and specific embodiments are used to describe the preparation of the lithium-ion battery. Those skilled in the art will appreciate that the preparation methods described in this application are merely examples, and any other suitable preparation method is within the scope of this application.

### EXAMPLES

Examples of lithium-ion batteries according to this application and comparative examples are described below.

### Preparation of lithium-ion batteries of this application

### Examples 1 to 60

Aluminum foil was used as the cathode current collector, a lithium cobaltate slurry was uniformly coated on both surfaces of the aluminum foil, the lithium cobaltate slurry consisting of 97.8wt% of LiCoO₂ (LCO), 0.8wt% of polyvinylidene fluoride (PVDF) and 1.4wt% of conductive carbon black, and cold pressing was performed after drying to prepare a cathode. Copper foil was used as the anode current collector, an artificial graphite slurry was uniformly coated on both surfaces of the copper foil, the slurry consisting of a combination of 97.7wt% of artificial graphite, 1.3wt% of carboxymethyl cellulose (CMC) and 1.0wt% of styrene butadiene rubber (SBR), and cold pressing and slitting were performed after drying; and polymer particles (Examples 1 to 9 and 11 to 60) or bulk polymethyl methacrylate (molecular weight being 7W) (Example 10) was added to polyvinylidene fluoride and about 65% by weight of N-methylpyrrolidone (NMP), dispersed at a constant speed to obtain a coating slurry, a layer of the polymer slurry was uniformly coated on the surface of the cold-pressed anode, the thickness of the polymer layer being controlled by controlling the coating speed and the discharge speed of the slurry, and drying was performed to volatilize the solvent so that the weight ratio of the polymer particles to the binder was about 94:6 based on the total weight of the polymer layer, thereby preparing an anode.

The cathode and the anode were separated by a PE separator to prepare a wound electrode assembly. After the electrode assembly was subjected to top side sealing, code spraying, vacuum drying, electrolytic solution injection and high-temperature standing, formation and capacity test were performed to obtain the finished lithium-ion battery.

The main differences of Examples 1 to 60 are the shape of the polymer particles, the particle size of the polymer particles, the melting temperature of the polymer particles, the thickness of the polymer layer, the coverage of the polymer layer on the anode active material layer, the porosity of the polymer layer, the binding force of the polymer layer to the anode active material layer, and the material type of the polymer particles in the polymer layer.

### Examples 61 to 63

Aluminum foil was used as the cathode current collector, a lithium cobaltate slurry was uniformly coated on both surfaces of the aluminum foil, the lithium cobaltate slurry consisting of 97.8wt% of LiCoO₂ (LCO), 0.8wt% of polyvinylidene fluoride (PVDF) and 1.4wt% of conductive carbon black, and cold pressing was performed after drying to prepare a cathode. Copper foil was used as the anode current collector, an artificial graphite slurry was uniformly coated on both surfaces of the copper foil, the slurry consisting of a combination of 97.7wt% of artificial graphite, 1.3wt% of carboxymethyl cellulose (CMC) and 1.0wt% of styrene butadiene rubber (SBR), and cold pressing and slitting were performed after drying, thereby preparing an anode. Polymer particles were added to polyvinylidene fluoride and about 65% by weight of N-methylpyrrolidone (NMP), dispersed at a constant speed to obtain a polymer layer slurry, a layer of the polymer slurry was uniformly coated on the surface of a PE separator, the thickness of the polymer layer being controlled by controlling the coating speed and the discharge speed of the slurry, and drying was performed to volatilize the solvent so that the weight ratio of the polymer particles to the binder was about 94:6 based on the total weight of the polymer layer, thereby preparing a separator having a polymer layer.

The cathode and the anode were separated by the separator having the polymer layer to prepare a wound electrode assembly. After the electrode assembly was subjected to top side sealing, code spraying, vacuum drying, electrolytic solution injection and high-temperature standing, formation and capacity test were performed to obtain the finished lithium-ion battery.

The main differences of Examples 61 to 63 are the thickness of the polymer layer and the coverage of the polymer layer on the anode active material layer.

### Preparation of conventional lithium-ion battery

### Comparative Example 1

Aluminum foil was used as the cathode current collector, a lithium cobaltate slurry was uniformly coated on both surfaces of the aluminum foil, the lithium cobaltate slurry consisting of 97.8wt% of LiCoO₂ (LCO), 0.8wt% of polyvinylidene fluoride (PVDF) and 1.4wt% of conductive carbon black, and cold pressing was performed after drying to prepare a cathode. Copper foil was used as the anode current collector, an artificial graphite slurry was uniformly coated on both surfaces of the copper foil, the slurry consisting of a combination of 97.7wt% of artificial graphite, 1.3wt% of carboxymethyl cellulose (CMC) and 1.0wt% of styrene butadiene rubber (SBR), and cold pressing and slitting were performed after drying, thereby preparing an anode.

The cathode and the anode were slit and wound, and separated by a PE separator, thereby preparing a wound electrode assembly. After the electrode assembly was subjected to top side sealing, code spraying, vacuum drying, electrolytic solution injection and high-temperature standing, formation and capacity test were performed to obtain the finished lithium-ion battery.

### Comparative Example 2

Aluminum foil was used as the cathode current collector, a lithium cobaltate slurry was uniformly coated on both surfaces of the aluminum foil, the lithium cobaltate slurry consisting of 97.8wt% of LiCoO₂ (LCO), 0.8wt% of polyvinylidene fluoride (PVDF) and 1.4wt% of conductive carbon black, and cold pressing was performed after drying to prepare a cathode. Copper foil was used as the anode current collector, an artificial graphite slurry was uniformly coated on both surfaces of the copper foil, the slurry consisting of a combination of 97.7wt% of artificial graphite, 1.3wt% of carboxymethyl cellulose (CMC) and 1.0wt% of styrene butadiene rubber (SBR), and cold pressing was performed; and Al₂O₃ (having a sphericity of 0.83) was added to polyvinylidene fluoride and about 65% by weight of N-methylpyrrolidone (NMP), dispersed at a constant speed to obtain a polymer slurry, a layer of the polymer slurry was uniformly coated on the surface of the cold-pressed anode, the thickness of the polymer layer being controlled by controlling the coating speed and the discharge speed of the slurry, and drying was performed to volatilize the solvent so that the weight ratio of the polymer particles to the binder was about 94:6 based on the total weight of the polymer layer, thereby preparing an anode.

### Test methods

By the following methods, the sphericity and particle size of the polymer particles were measured, the capacity, thickness, width and length of the finished lithium-ion battery were measured to determine the volume energy density of the lithium-ion battery, the nail penetration performance of the lithium-ion battery was measured to determine the mechanical safety performance of the lithium-ion battery, and the discharge rate performance of the lithium-ion battery was measured to determine the kinetic performance of the lithium-ion battery.

The test method of the sphericity of the polymer particles is as follows: the analyzer was turned on to test the blank sample, 5g of the sample was placed in the sample chamber when the blank sample had no particle size distribution, and the Camsizer X2 particle size and shape analyzer produced by Retsch Technology was used for testing to obtain the sphericity value of the material.

The test method of the particle size of the polymer particles is as follows: after the laser particle size analyzer was turned on, the blank background test was performed first, and the particle size test was performed when there was no obvious characteristic peak on the blank background: a certain amount of polymer particles (lg) was taken, an appropriate amount of surfactant was added, a dispersing agent (water or alcohol) was added for dispersion, ultrasonic treatment was performed for 10rnin, the dispersed polymer particles were added to the sample chamber for testing to obtain the particle size distribution of the polymer particles, and the relevant software automatically output a particle size distribution curve of the polymer particles, and calculation was performed to obtain Dv50 and Dv99.

The test method of the capacity of the lithium-ion battery is as follows (to evaluate the capacity of the lithium-ion battery and further calculate the volume energy density of the lithium-ion battery): the battery was allowed to stand in a 25±3°C environment for 30min, charged at a constant current of 0.5C (1C is the rated capacity of the lithium-ion battery) until the voltage of the lithium-ion battery reached 4.4V (the rated voltage), and charged at a constant voltage until the current reached 0.05C; the battery was allowed to stand for 30min; the lithium-ion battery was discharged at a current of 0.2C to 3.0V and allowed to stand for 30min; and the discharge capacity was taken as the actual capacity of the lithium-ion battery. The actual capacity of the lithium-ion battery was multiplied by the actual voltage platform of the lithium-ion battery and divided by the volume of the lithium-ion battery to obtain the actual volume energy density of the lithium-ion battery.

The nail penetration test method is as follows (to evaluate the nail penetration performance of the lithium-ion battery): 10 batteries prepared in the examples/comparative examples of this application were taken, fully charged (at a constant current of 0.5C to 4.4V, and charged at a constant voltage until the current reached 0.05C) in a 25±3°C environment, and subjected to nail penetration (the steel nail made of carbon steel and having a diameter of 4mm, , a taper of 16.5mm and a total length of 100mm was used) under normal temperature conditions, where the nail penetration speed was set to be 30mm/s, and the nail penetration depth was based on the taper of the steel nail penetrating the lithium-ion battery.

The test method of the discharge rate is as follows (to evaluate the kinetic performance of the lithium-ion battery): the lithium-ion battery was allowed to stand in a 25°C±3°C environment for 30min, charged at a constant current of 0.5C to 4.4V, and charged at a constant voltage until the current reached 0.05C; the lithium-ion battery was allowed to stand for 30min; the lithium-ion battery was discharged at a constant current of 0.2C to 3.0V, and the discharge capacity was recorded as C1; the lithium-ion battery was allowed to stand for 30min; the lithium-ion battery was charged at a constant current of 0.5C to 4.4V, and charged at a constant voltage until the current reached 0.05C; the lithium-ion battery was allowed to stand for 30min; the lithium-ion battery was discharged at a constant current of 2.0C to 3.0V, and the discharge capacity was recorded as C2, where C2/C1 was the discharge rate of the lithium-ion battery under 2C.

The test method of the binding force between the polymer layer and the anode active material layer is as follows: the anode coated with the polymer layer was bound to a smooth steel plate with a double-sided tape, the other side of the sheet was glued with a gummed paper, one end of the gummed paper was fixed to a tensile machine, the gummed paper was pulled by the tensile machine, the binding force when the gummed paper was stretched was read, and the data was exported and divided by the width of the gummed paper to obtain the binding force between the polymer layer and the anode active material layer.

Table 1 shows the variable settings and test results for each of the examples and comparative examples.

### 1. Effect of shape of polymer particles on performance of lithium-ion battery

The "Shape of Polymer Particles" section (i.e., Examples 1 to 10) of Table 1 shows the effect of different shapes of polymer particles on the performance of the lithium-ion battery. The results show that the closer the shape of the polymer particles is to a spherical shape, that is, the closer the sphericity is to 1, the better the rate performance of the lithium-ion battery, and the higher the pass rate of the nail penetration test.

### 2. Effect of particle size of polymer particles on performance of lithium-ion battery

The "Particle Size Dv50 (µm)" and the "Particle Size Dv99 (µm)" sections (i.e., Examples 3 and 11 to 23) of Table 1 show the effect of the particle size of the polymer particles on the performance of the lithium-ion battery. The results show that by adjusting the Dv50 size of the polymer particles, the nail penetration performance of the lithium-ion battery can be improved, and when the polymer particles have a Dv50 of less than or equal to 2 µm, the pass rate of the nail penetration test can reach greater than or equal to 60%. By adjusting the Dv99 size of the polymer particles, the nail penetration performance of the lithium-ion battery can be improved, and when the polymer particles have a Dv99 of less than or equal to 5 µm, the pass rate of the nail penetration test is greater than or equal to 50%.

### 3. Effect of melting temperature of polymer particles on performance of lithium-ion battery

The "Melting Temperature (°C)" section (i.e., Examples 3 and 24 to 30) of Table 1 shows the effect of the melting temperature of the polymer particles on the performance of the lithium-ion battery. The molecular weights of the polymer particles in Examples 3 and 24 to 30 are as follows:

| Example | Melting Temperature (°C) | Molecular weight |
|---|---|---|
| 3 | 80 | 7W |
| 24 | 50 | 2W |
| 25 | 100 | 9W |
| 26 | 130 | 12W |
| 27 | 150 | 13W |
| 28 | 200 | 15W |
| 29 | 300 | 18W |
| 30 | 500 | 20W |

The results show that the melting temperature of the polymer particles has a great effect on the nail penetration performance. When the melting temperature of the polymer particles is too high, the nail penetration performance of the lithium-ion battery is lowered because the temperature in the nail penetration process is insufficient to melt the polymer, which reduces the protection on the anode. When the melting temperature of the polymer particles is too low, the rate performance of the lithium-ion battery is lowered because the lithium-ion battery has a certain temperature rise during charging and discharging, and if the temperature rises to the melting temperature of the polymer, the porosity is reduced after the polymer is melted, so that the transport of lithium ions is affected. In addition, if the melting temperature of the polymer particles is too low, the nail penetration performance of the lithium-ion battery will also be lowered because the melted polymer infiltrates to the electrode interior during the formation and the charging and discharging of the lithium-ion battery, which results in the weakening of the coverage on the surface of the electrode and a reduction of the nail penetration performance of the lithium-ion battery.

### 4. Effect of thickness of polymer layer on performance of lithium-ion battery

The "Thickness of Polymer Layer (µm)" section (i.e., Examples 3 and 31 to 38) of Table 1 shows the effect of the thickness of the polymer layers on the performance of the lithium-ion battery. The results show that the thinner the polymer layer, the higher the volume energy density of the lithium-ion battery and the better the rate performance, but the lower the pass rate of the nail penetration test. The thicker the polymer layer, the lower the volume energy density of the lithium-ion battery and the lower the rate performance, but the higher the pass rate of the nail penetration test.

### 5. Effect of coverage of polymer layer on anode active material layer on performance of lithium-ion battery

The "Coverage of Polymer Layer on Anode Active Material Layer" section (i.e. Examples 3 and 39 to 43) of Table 1 shows the effect of the coverage of the polymer layer on the anode active material layer on the performance of the lithium-ion battery. The results show that the higher the coverage of the polymer layer, the higher the pass rate of the nail penetration test. When the coverage of the polymer layer is less than 50%, the pass rate of the nail penetration test is less than 50%.

### 6. Effect of porosity of polymer layer on performance of lithium-ion battery

The "Porosity of Polymer Layer" section (i.e., Examples 3 and 44 to 47) of Table 1 shows the effect of the thickness of the polymer layers on the performance of the lithium-ion battery. The results show that the higher the porosity of the polymer layer, the better the rate performance of the lithium-ion battery, but the poorer the nail penetration performance of the lithium-ion battery. When the porosity of the polymer layer is lowered, the rate performance of the lithium-ion battery is increased, but the pass rate of the nail penetration test of the lithium-ion battery is lowered.

### 7. Effect of binding force between polymer layer and anode active material layer on performance of lithium-ion battery

The "Binding Force between Polymer Layer and Anode Active Material Layer (N/m)" section (i.e., Examples 3 and 48 to 55) of Table 1 shows the binding force between the polymer layer and the anode active material layer on the performance of the lithium-ion battery. The results show that when the binding force between the polymer layer and the anode active material layer is lowered, the pass rate of the nail penetration test of the lithium-ion battery is lowered, and when the binding force is less than 5N, the pass rate of the nail penetration test is less than 50%.

### 8. Effect of different polymer particle materials on performance of lithium-ion battery

The "Different Material Types of Polymer Particles" section (i.e., Examples 56 to 60) of Table 1 shows the effect of different material types of the polymer particles on the performance of the lithium-ion battery. The results show that the polymer particles may also achieve good results when polyacrylic acid, polyethylene, polypropylene, polyimide and polystyrene are used.

### 9. When the polymer layer is disposed on the separator

As shown in Table 2, when the polymer layer is disposed on the separator (i.e., Examples 61 to 63), a substantially equivalent effect when the polymer layer is coated on the anode can be achieved.

### 10. Comparison of Examples and Comparative Examples of this application

The "Comparative Examples" section of Table 1 shows the parameters and the corresponding lithium-ion battery performance of Comparative Examples 1 and 2. Compared with Comparative Examples 1, the examples of this application have significantly improved nail penetration performance of the lithium-ion battery because of the polymer layer. Compared with Comparative Examples 2, a polymer is used in the polymer layer of the embodiments of this application, and the nail penetration performance of the lithium-ion battery is greatly improved as compared with the inorganic particles in the coating of Comparative Example 2.

References throughout the specification to "embodiments", "partial embodiments", "an embodiment", "another example", "examples", "specific examples" or "partial examples" mean that at least one embodiment or example of this application includes specific features, structures, materials or characteristics described in the embodiments or examples. Therefore, descriptions appearing throughout the specification, such as "in some embodiments", "in the embodiments", "in an embodiment", "in another example", "in an example", "in a particular example" or "examples", are not necessarily referring to the same embodiments or examples in this application. Furthermore, the particular features, structures, materials or characteristics herein may be combined in any suitable manner in one or more embodiments or examples.

Although the illustrative embodiments have been shown and described, it should be understood by those skilled in the art that the above-described embodiments are not to be construed as limiting this application, and variations, substitutions and modifications may be made to the embodiments without departing from the spirit, principle and scope of this application.

**Table 1**

| **Variable Settings** | **Parameters of Examples and Comparative Examples** | | | | | | | | | | **Battery Performance** | | |
|---|---|---|---|---|---|---|---|---|---|---|---|---|---|
| | Examples | Polymer Layer Material | Sphericity of Particles | Particle Size Dv50 (µm) | Particle Size Dv99 (µm) | Melting Temperature (°C) | Thickness of Polymer Layer (µm) | Coverage of Polymer Layer on Anode Active Material | Porosity of Polymer Layer | Binding Force between Polymer Layer and Anode Active Material Layer (N/m) | Volume Energy Density (Wh/L) | Pass Rate of 4.4V Nail Penetration Test | 2C Rate |
| Shape of Polymer Particles | 1 | PMMA | 1.0 | 1 | 3 | 80 | 3 | 100% | 50% | 15 | 729 | 9/10 | 85.4% |
| | 2 | PMMA | 0.99 | 1 | 3 | 80 | 3 | 100% | 50% | 15 | 729 | 9/10 | 85.1% |
| | 3 | PMMA | 0.98 | 1 | 3 | 80 | 3 | 100% | 50% | 15 | 729 | 9/10 | 84.7% |
| | 4 | PMMA | 0.95 | 1 | 3 | 80 | 3 | 100% | 50% | 15 | 729 | 9/10 | 82.9% |
| | 5 | PMMA | 0.91 | 1 | 3 | 80 | 3 | 100% | 50% | 15 | 729 | 9/10 | 82.3% |
| | 6 | PMMA | 0.87 | 1 | 3 | 80 | 3 | 100% | 50% | 15 | 729 | 9/10 | 81.5% |
| | 7 | PMMA | 0.85 | 1 | 3 | 80 | 3 | 100% | 50% | 15 | 729 | 8/10 | 81.3% |
| | 8 | PMMA | 0.82 | 1 | 3 | 80 | 3 | 100% | 50% | 15 | 729 | 7/10 | 80.7% |
| | 9 | PMMA | 0.80 | 1 | 3 | 80 | 3 | 100% | 50% | 15 | 729 | 7/10 | 80.1% |
| | 10 | PMMA | The polymer was bulky and integrated | / | / | / | 3 | 100% | 50% | 15 | 729 | 4/10 | 78.4% |
| Particle Size Dv50 (µm) | 11 | PMMA | 0.98 | 0.2 | 3 | 80 | 3 | 100% | 50% | 15 | 729 | 10/10 | 83.9% |
| | 12 | PMMA | 0.98 | 0.5 | 3 | 80 | 3 | 100% | 50% | 15 | 729 | 9/10 | 84.3% |
| | 3 | PMMA | 0.98 | 1 | 3 | 80 | 3 | 100% | 50% | 15 | 729 | 9/10 | 84.7% |
| | 13 | PMMA | 0.98 | 1.5 | 3 | 80 | 3 | 100% | 50% | 15 | 729 | 8/10 | 85.8% |
| | 14 | PMMA | 0.98 | 2 | 3 | 80 | 3 | 100% | 50% | 15 | 729 | 6/10 | 86.2% |
| Particle Size Dv99 (µm) | 15 | PMMA | 0.98 | 1 | 2 | 80 | 3 | 100% | 50% | 15 | 729 | 10/10 | 85.4% |
| | 3 | PMMA | 0.98 | 1 | 3 | 80 | 3 | 100% | 50% | 15 | 729 | 9/10 | 84.7% |
| | 16 | PMMA | 0.98 | 1 | 5 | 80 | 3 | 100% | 50% | 15 | 729 | 7/10 | 84.1% |
| | 17 | PMMA | 0.98 | 0.2 | 0.5 | 80 | 3 | 100% | 50% | 15 | 729 | 10/10 | 83.9% |
| | 18 | PMMA | 0.98 | 0.2 | 0.8 | 80 | 3 | 100% | 50% | 15 | 729 | 10/10 | 83.9% |
| | 19 | PMMA | 0.98 | 0.2 | 1 | 80 | 3 | 100% | 50% | 15 | 729 | 10/10 | 83.9% |
| | 20 | PMMA | 0.98 | 0.2 | 1.5 | 80 | 3 | 100% | 50% | 15 | 729 | 10/10 | 83.9% |
| | 21 | PMMA | 0.98 | 0.2 | 2 | 80 | 3 | 100% | 50% | 15 | 729 | 9/10 | 83.9% |
| | 22 | PMMA | 0.98 | 0.2 | 3 | 80 | 3 | 100% | 50% | 15 | 729 | 7/10 | 83.9% |
| | 23 | PMMA | 0.98 | 0.2 | 5 | 80 | 3 | 100% | 50% | 15 | 729 | 5/10 | 83.9% |
| Melting Temperature( °C) | 3 | PMMA | 0.98 | 1 | 3 | 80 | 3 | 100% | 50% | 15 | 729 | 9/10 | 84.7% |
| | 24 | PMMA | 0.98 | 1 | 3 | 50 | 3 | 100% | 50% | 15 | 729 | 9/10 | 72.4% |
| | 25 | PMMA | 0.98 | 1 | 3 | 100 | 3 | 100% | 50% | 15 | 729 | 10/10 | 84.9% |
| | 26 | PMMA | 0.98 | 1 | 3 | 130 | 3 | 100% | 50% | 15 | 729 | 10/10 | 85.4% |
| | 27 | PMMA | 0.98 | 1 | 3 | 150 | 3 | 100% | 50% | 15 | 729 | 10/10 | 85.4% |
| | 28 | PMMA | 0.98 | 1 | 3 | 200 | 3 | 100% | 50% | 15 | 729 | 10/10 | 85.4% |
| | 29 | PMMA | 0.98 | 1 | 3 | 300 | 3 | 100% | 50% | 15 | 729 | 8/10 | 85.4% |
| | 30 | PMMA | 0.98 | 1 | 3 | 500 | 3 | 100% | 50% | 15 | 729 | 6/10 | 85.4% |
| Thickness of Polymer Layer (µm) | 31 | PMMA | 0.98 | 0.2 | 3 | 80 | 0.5 | 100% | 50% | 15 | 740 | 7/10 | 87.1% |
| | 32 | PMMA | 0.98 | 0.2 | 3 | 80 | 0.8 | 100% | 50% | 15 | 738 | 8/10 | 86.3% |
| | 33 | PMMA | 0.98 | 0.2 | 3 | 80 | 1 | 100% | 50% | 15 | 737 | 9/10 | 85.6% |
| | 34 | PMMA | 0.98 | 0.2 | 3 | 80 | 3 | 100% | 50% | 15 | 729 | 10/10 | 83.9% |
| | 35 | PMMA | 0.98 | 0.2 | 3 | 80 | 5 | 100% | 50% | 15 | 721 | 10/10 | 80.6% |
| | 36 | PMMA | 0.98 | 1 | 3 | 80 | 1.5 | 100% | 50% | 15 | 735 | 8/10 | 87% |
| | 37 | PMMA | 0.98 | 1 | 3 | 80 | 2 | 100% | 50% | 15 | 733 | 9/10 | 86.7% |
| | 3 | PMMA | 0.98 | 1 | 3 | 80 | 3 | 100% | 50% | 15 | 729 | 9/10 | 84.7% |
| | 38 | PMMA | 0.98 | 1 | 3 | 80 | 5 | 100% | 50% | 15 | 721 | 10/10 | 81.9% |
| Coverage of Polymer Layer on Anode Active Material | 39 | PMMA | 0.98 | 1 | 3 | 80 | 3 | 50% | 50% | 15 | 729 | 5/10 | 84.7% |
| | 40 | PMMA | 0.98 | 1 | 3 | 80 | 3 | 60% | 50% | 15 | 729 | 8/10 | 84.7% |
| | 41 | PMMA | 0.98 | 1 | 3 | 80 | 3 | 70% | 50% | 15 | 729 | 8/10 | 84.7% |
| | 42 | PMMA | 0.98 | 1 | 3 | 80 | 3 | 80% | 50% | 15 | 729 | 9/10 | 84.7% |
| | 43 | PMMA | 0.98 | 1 | 3 | 80 | 3 | 90% | 50% | 15 | 729 | 9/10 | 84.7% |
| | 3 | PMMA | 0.98 | 1 | 3 | 80 | 3 | 100% | 50% | 15 | 729 | 9/10 | 84.7% |
| Porosity of Polymer Layer | 44 | PMMA | 0.98 | 1 | 3 | 80 | 3 | 100% | 20% | 15 | 729 | 10/10 | 80.5% |
| | 45 | PMMA | 0.98 | 1 | 3 | 80 | 3 | 100% | 30% | 15 | 729 | 10/10 | 82.0% |
| | 3 | PMMA | 0.98 | 1 | 3 | 80 | 3 | 100% | 50% | 15 | 729 | 9/10 | 84.7% |
| | 46 | PMMA | 0.98 | 1 | 3 | 80 | 3 | 100% | 70% | 15 | 729 | 8/10 | 86.8% |
| | 47 | PMMA | 0.98 | 1 | 3 | 80 | 3 | 100% | 80% | 15 | 729 | 7/10 | 87.3% |
| Binding | 48 | PMMA | 0.98 | 1 | 3 | 80 | 3 | 100% | 50% | 5 | 729 | 7/10 | 84.7% |
| Force between Polymer Layer and Anode Active Material Layer (N/m) | 49 | PMMA | 0.98 | 1 | 3 | 80 | 3 | 100% | 50% | 8 | 729 | 8/10 | 84.7% |
| | 50 | PMMA | 0.98 | 1 | 3 | 80 | 3 | 100% | 50% | 10 | 729 | 9/10 | 84.7% |
| | 3 | PMMA | 0.98 | 1 | 3 | 80 | 3 | 100% | 50% | 15 | 729 | 9/10 | 84.7% |
| | 51 | PMMA | 0.98 | 1 | 3 | 80 | 3 | 100% | 50% | 20 | 729 | 10/10 | 84.7% |
| | 52 | PMMA | 0.98 | 1 | 3 | 80 | 3 | 100% | 50% | 30 | 729 | 10/10 | 84.7% |
| | 53 | PMMA | 0.98 | 1 | 3 | 80 | 3 | 100% | 50% | 50 | 729 | 10/10 | 84.7% |
| | 54 | PMMA | 0.98 | 1 | 3 | 80 | 3 | 100% | 50% | 80 | 729 | 10/10 | 84.7% |
| | 55 | PMMA | 0.98 | 1 | 3 | 80 | 3 | 100% | 50% | 100 | 729 | 10/10 | 84.7% |
| Different Material Types of Polymer Particles | 56 | PAA | 0.98 | 1 | 3 | 80 | 3 | 100% | 50% | 15 | 729 | 9/10 | 86.3% |
| | 57 | PE | 0.98 | 1 | 3 | 80 | 3 | 100% | 50% | 15 | 729 | 10/10 | 84.3% |
| | 58 | PP | 0.98 | 1 | 3 | 80 | 3 | 100% | 50% | 15 | 729 | 10/10 | 82.9% |
| | 59 | P1 | 0.98 | 1 | 3 | 80 | 3 | 100% | 50% | 15 | 729 | 8/10 | 83.9% |
| | 60 | PS | 0.98 | 1 | 3 | 80 | 3 | 100% | 50% | 15 | 729 | 8/10 | 84.4% |
| | | | | | | | | | | | | | |
| Comparative Examples | 1 | / | / | / | / | / | / | / | / | / | 742 | 0/10 | 88.2% |
| | 2 | Al₂O₃ | 0.83 | 1 | 3 | / | 3 | 100% | 50% | 15 | 729 | 3/10 | 79.4% |

| | | | | | | | | | | | | | |
|---|---|---|---|---|---|---|---|---|---|---|---|---|---|
| Note: 10/10 means that the number of batteries subjected to the nail penetration test was 10 and the 10 batteries all passed the nail penetration test. | | | | | | | | | | | | | |

**Table 2**

| **Variable Settings** | **Parameters of Examples and Comparative Examples** | | | | | | | | | | **Battery Performance** | | |
|---|---|---|---|---|---|---|---|---|---|---|---|---|---|
| | Example | Polymer Layer Material | Sphericity of Particles | Particle Size Dv50 (µm) | Particle Size Dv99 (µm) | Melting Temperature (°C) | Thickness of Polymer Layer (µm) | Coverage of Polymer Layer on Anode Active Material | Porosity of Polymer Layer | Binding Force between Polymer Layer and Anode Active Material Layer (N/m) | Volume Energy Density (Wh/L) | Pass Rate of 4.4V Nail Penetration Test | 2C Rate |
| When the polymer layer is disposed on the separator | 61 | PMMA | 0.98 | 1 | 3 | 80 | 3 | 100% | 50% | 15 | 729 | 8/10 | 85.6% |
| | 62 | PMMA | 0.98 | 1 | 3 | 80 | 5 | 100% | 50% | 15 | 721 | 10/10 | 82.4% |
| | 63 | PMMA | 0.98 | 1 | 3 | 80 | 5 | 70% | 50% | 15 | 721 | 6/10 | 85.6% |

| | | | | | | | | | | | | | |
|---|---|---|---|---|---|---|---|---|---|---|---|---|---|
| Note: 10/10 means that the number of batteries subjected to the nail penetration test was 10 and the 10 batteries all passed the nail penetration test. | | | | | | | | | | | | | |

## Claims

1. An electrochemical device (20), comprising:
an anode, the anode comprising an anode active material layer (203);
a separator (205); and
a polymer layer (206), wherein the polymer layer is disposed between the anode active material layer (203) and the separator (205).

2. The electrochemical device (20) according to claim 1, wherein the polymer layer (206) comprises polymer particles, the polymer particles having a sphericity of 0.70 to 1.0.

3. The electrochemical device (20) according to claim 2, wherein the polymer particles having a sphericity of 0.98.

4. The electrochemical device (20) according to claim 2 or 3, wherein the polymer particles are selected from the group consisting of polyethylene, polypropylene, polymethyl methacrylate, polyimide, polyacrylic acid, polystyrene and combinations thereof.

5. The electrochemical device (20) according to any one of claims 2-4, wherein the polymer particles have a melting temperature of 80°C to 500°C.

6. The electrochemical device (20) according to any one of claims 2-5, wherein the polymer particles have a Dv50 of 0.2 µm to 2 µm.

7. The electrochemical device (20) according to any one of claims 2-6, wherein the polymer particles have a Dv99 of 0.5 µm to 5 µm.

8. The electrochemical device (20) according to any one of claims 1-7, wherein the polymer layer (206) has a thickness of 0.5 µm to 5 µm.

9. The electrochemical device (20) according to any one of claims 1-8, wherein the polymer layer (206) has a porosity of 20% to 80%.

10. The electrochemical device (20) according to any one of claims 1-9, wherein the polymer layer (206) is disposed on a surface of the anode active material layer (203), and the polymer layer (206) has a coverage on the surface of the anode active material layer (203) of 50% to 100%.

11. The electrochemical device (20) according to any one of claims 1-10, wherein the polymer layer (206) further comprises a binder, the binder being selected from the group consisting of polyacrylonitrile, polyacrylate ester, polyacrylate salt, styrene butadiene rubber, sodium carboxymethylcellulose, polyvinylidene fluoride, polyvinyl ether, vinylidene fluoride-hexafluoropropylene copolymer, polytetrafluoroethylene, polyhexafluoropropylene and combinations thereof.

12. The electrochemical device (20) according to claim 11, wherein the weight percentage of the binder is 1% to 5% based on the total weight of the polymer layer (206).

13. The electrochemical device (20) according to any one of claims 1-12, wherein the binding force between the polymer layer (206) and the anode active material layer (203) is 5 N/m or more.

14. The electrochemical device (20) according to any one of claims 1-13, wherein the electrochemical device (20) is a lithium-ion battery.

15. The electrochemical device (20) according to claim 14, wherein the lithium-ion battery comprises an electrode assembly, the electrode assembly comprising a wound structure, a laminated structure or a folded structure.
